# EUROPEAN PATENT APPLICATION

(11) **EP 4 465 234 A1**
(43) Date of publication of application: **20.11.2024**
(21) Application number: 24174941.5
(22) Date of filing: 08.05.2024
(51) Int. Cl.: G06Q 50/163, G06V 20/20

(54) **ENTITY-BASED DIGITAL TWIN ARCHITECTURE**

(30) Priority: 10.05.2023 US 202363501351 P
(71) Applicant: dataArrows Inc., Bristol, RI 02809 (US)
(72) Inventor: RAMAJI, Issa, Bristol, RI, 02809 (US); MOSTAVI, Ehsan, Bristol, RI, 02809 (US)
(74) Representative: Vossius & Partner Patentanwälte Rechtsanwälte mbB

(57) **Abstract**

Systems, methods, and apparatus for building management are described. The methods, among other benefits, improve the decision-making effectiveness and efficiency of entity-based building management. An example method includes modeling and managing a building on an entity level by dividing the building and its related information into one or more entities, where a management result is presented in a two-dimensional (2D) representation, a three-dimensional (3D) representation, or an augmented reality (AR) representation. Another example method includes using a predictive artificial intelligence (AI) model to manage a building on an entity level by dividing the building and its related information into one or more entities, where the predictive AI model is a multi-input multi-output system.

## Description

### CROSS REFERENCE TO RELATED APPLICATION

This patent document claims priority to and benefit of U. S. Provisional Patent Application No. 63/501,351 filed on May 10, 2023. The entire content of the aforementioned patent application is incorporated by reference as part of the disclosure of this application.

### TECHNICAL FIELD

This patent document is directed generally to building management.

### BACKGROUND

Building management is the process of monitoring, controlling, and maintaining the physical infrastructure of a building, including its facilities, systems, and equipment. The systems include heating, ventilation, and air conditioning (HVAC) systems, such as temperature, humidity, carbon dioxide level, particle level, etc. The systems also include lighting systems, security systems, fire alarm systems, elevators, plumbing systems, piping systems, irrigation systems, parking monitoring systems, etc. A well-managed building provides benefits such as comfort, security, energy efficiency, etc.

### SUMMARY

The present patent document provides entity-based digital twin building management. Physical portions of a building are represented by entities in a digital twin model. Modeling results of each entity collectively yield a management decision for one or more portions of the building or the entire building. Entity-based building management, among other benefits, improves the decision-making effectiveness and efficiency.

A first example method is of modeling and managing a building on an entity level by dividing the building and its related information into one or more entities, where a management result is presented in a two-dimensional (2D) representation, a three-dimensional (3D) representation, or an augmented reality (AR) representation. The method includes extracting, by a computing device and from a building information model, building information associated with an entity of the one or more entities of the building and including one or more physical attributes of the entity. The method further includes receiving, by the computing device, instrument data including one or more types of information associated with the entity and automatically obtained from one or more types of instruments corresponding to the one or more types of information. The method further includes receiving, by the computing device, user input data including one or more data entries reporting one or more conditions of the entity or providing one or more tags indicating one or more characteristics of the entity. The method further includes analyzing, by the computing device, a relationship between the entity and other entities having relationship connections with the entity or a similar characteristic between the entity and other entities sharing a same tag of the one or more tags as the entity. The method further includes generating, by the computing device and based on at least one of the building information, the instrument data, the user input data, the relationship, or the similar characteristic, an insight of the entity by determining one or more parameters associated with the entity. The method further includes sending, by the computing device and based on the insight, the management result associated with the entity and to be presented in the 2D representation, the 3D representation, or the AR representation. The method further includes sending, by the computing device and based on the insight or a change in a value of an attribute, an alert or a management action triggered by the alert.

A second example method is of collecting sensor data and using the sensor data to manage a building on an entity level by dividing the building and its related information into one or more entities. The method includes pairing, by a computing device, one or more types of sensors with each entity of the one or more entities. The method further includes receiving, by the computing device, the sensor data including one or more types of information automatically obtained from the one or more types of sensors and corresponding to the each entity of the one or more entities. The method further includes determining, by the computing device and based on the one or more types of information, a status of the each entity of the one or more entities as to one or more physical attributes measured by the one or more types of sensors. The method further includes generating, by the computing device and based on the status of the each entity of the one or more entities as to the one or more physical attributes, an insight of the each entity of the one or more entities by determining one or more parameters associated with the each entity of the one or more entities. The method further includes determining, by the computing device and based on the insight of the each entity of the one or more entities, a management decision associated with the each entity of the one or more entities.

A third example method is of analyzing tag data and using the tag data to manage a building on an entity level by dividing the building and its related information into one or more entities. The method includes receiving, by a computing device, one or more tags associated with a first entity of the one or more entities and one or more management decisions associated with the first entity of the one or more entities. The method further includes analyzing, by the computing device, a relationship between the one or more tags associated with the first entity of the one or more entities and each management decision of the one or more management decisions associated with the first entity of the one or more entities. The method further includes receiving, by the computing device, one or more tags associated with a second entity of the one or more entities. The method further includes analyzing, by the computing device, similarities and differences between the one or more tags associated with the first entity of the one or more entities and the one or more tags associated with the second entity of the one or more entities. The method further includes determining, by the computing device and based on the similarities, the differences, and the relationship between the one or more tags associated with the first entity and the each management decision associated with the first entity, a management decision associated with the second entity of the one or more entities.

A fourth example method is of using a predictive artificial intelligence (AI) model to manage a building on an entity level by dividing the building and its related information into one or more entities, where the predictive AI model is a multi-input multi-output system. The method includes receiving, by a computing device, a dynamic data structure for each entity of the one or more entities, where the dynamic data structure includes one or more dynamic data types collected at one or more snapshot frequencies, and where the dynamic data structure is stored in a dynamic data table named using each entity's globally unique identifier (GUID). The method further includes receiving, by the computing device, a static data structure for each entity of the one or more entities, where the static data structure is updated before an integration of the static data structure into a machine learning process, and where the static data structure is stored in a static data table. The method further includes integrating, by the computing device, the dynamic data structure and the static data structure into a combined data structure. The method further includes appending, by the computing device, one or more other data structures to the combined data structure to form an enriched data structure. The method further includes providing, by the computing device, the enriched data structure as an input to the predictive AI model, where the predictive AI model uses the enriched data structure to generate a value of one or more physical attributes for each entity of the one or more entities for a future timestamp, and where the value of the one or more physical attributes is used to generate an insight or a management decision associated with each entity of the one or more entities. In some embodiments, the AI model can also integrate other information, such as tags, related entities, etc.

In yet another example embodiment, a device that is configured or operable to perform the above-described methods is disclosed. The device includes at least one processor configured to implement the above-described methods.

In yet another example embodiment, the above-described methods are embodied in the form of processor-executable code and stored in a non-transitory computer-readable storage medium. The code included in the computer readable storage medium when executed by a processor, causes the processor to implement the methods described in this patent document.

The above and other aspects and their implementations are described in greater detail in the drawings, the descriptions, and the claims.

### BRIEF DESCRIPTION OF THE DRAWINGS

The present patent document is described in more detail by the accompanying drawings, which depict various embodiments and examples. The drawings are intended to be illustrative and not restrictive, and do not limit the scope of the patent document. The following description provides additional specificity and details for a better understanding of the disclosed embodiments.
FIG. 1 illustrates an example for color-coding elements in a 3D/BIM model for visual communication/representation of the differences in the value of a specific attribute/property/insight semantic between entities of a facility.
FIG. 2 illustrates an example overall flow of data in the computer system.
FIG. 3 illustrates an example overall architecture of entities in the computer system.
FIG. 4 illustrates an example overall workflow of taking snapshot of the dynamic information from the Short-Term Database to Long-Term Database.
FIG. 5 is an example flowchart of how tags are used to define relationships between entities.
FIG. 6 is an example flowchart of how the inheritability of an attribute/insight/property can affect the accessibility of a super-entity to its sub-entity. It also shows how it impacts the data that are used for training of the super-entity's machine learning models.
FIG. 7 illustrates an example of how insights are calculated using static and dynamic data.
FIG. 8 illustrates an example of how entities and its architecture support training of Machine Learning models for an entity.
FIG. 9 illustrates an example overall workflow for autonomously optimizing HVAC operations.
FIG. 10 illustrates an example data flow in the computer system used for Integration of entities with 3D/BIM models.
FIG. 11 illustrates an example data flow in the computer system used for Integration of entities with 2D drawings/sketches.
FIG. 12 is an example flowchart showing the overall workflow of setting of up the calculation of insights for the entities of a facility.
FIG. 13 is an example flowchart showing the overall data flow in the computer system.
FIG. 14 illustrates example relationships between entities.
FIG. 15 illustrates example alerts and actions.
FIG. 16 is an example flowchart for managing a building on an entity level.
FIG. 17 is an example flowchart for collecting and using sensor data.
FIG. 18 is an example flowchart for analyzing and using tag data.
FIG. 19 is an example flowchart for using a predictive artificial intelligence (AI) model to manage a building.

### DETAILED DESCRIPTION

The present patent document provides entity-based digital twin building management. Entity-based building management, among other benefits, improves the decision-making effectiveness and efficiency.

Entity-based digital twin building management includes integrating building as-built and operational data for enhanced facility management, monitoring, control, visualization, and automation.

This patent document outlines a method for utilizing digital twins to enable interactive visualization, monitoring, control, and management of facilities. The process involves collecting data from various sources, including manual inputs, and extracting the semantics of the collected data. The collected data is analyzed and monitored against predefined alert triggers, and mapped to three-dimensional (3D) as-built Building Information Model (BIM) and two-dimensional (2D) drawings. Machine learning methods are applied to analyze the data for identifying and predicting the status of buildings and any issues. By utilizing this technology, users can interactively access the 3D, 2D, and augmented reality (AR) environments to review the sensed and analyzed data, analyze information, and receive guidance related to each entity.

The recent development of Internet of Things (IoT) technology has created significant opportunities for collecting assets' status and performance data. However, in facilities, there are multiple systems, each with its own software for managing information, resulting in fragmented operation data. The current software applications usually represent information in a table-based format or with Two-Dimensional (2D) drawings or schematic representations of systems. Our entity-based digital twin technology, TwinUp, addresses this issue by integrating as-built, live, and various operation data in a specific architecture that captures the relationship between information for Artificial Intelligent (AI) -related applications and represents information in various forms, such as 2D, 3D, and in augmented reality (AR) environments.

The digital twinning platform, TwinUp, developed by dataArrows, is a centralized and intelligent digital twinning platform designed for managing the operation of facilities (including both buildings and infrastructures). TwinUp enables facility managers and owners to remotely monitor and control their facilities, and it is being further developed to enable the autonomous operation of facility systems. TwinUp is cloud-based and allows users to manage their facilities 24/7 from any web browser on a phone or computer. The platform assesses facility conditions in real-time and sends alerts if anomalies are detected. TwinUp can input Building Information Models (BIM), and its interface with the building automation system (BMS) enables managers to respond quickly to issues and optimize their building systems remotely without being on-site. TwinUp's customer base includes owners and managers of small commercial buildings, such as offices, as well as large facilities and infrastructures like universities and healthcare campuses and pipeline systems in cities. Although initially developed for the building and infrastructure industry, TwinUp's architecture is industry-agnostic, and dataArrows may consider applying it to other industries in the future.

The present patent document relates to the integration and management of facility operation data and as-built information to create digital twins, which can serve several use cases and be visualized in various environments (e.g., 2D, 3D, and AR). Its architecture and algorithms enable the definition of relationships between facility objects/components, called entities, that are essential for AI-based analytics implementation.

This patent document introduces a computer system and associated algorithms that (1) generate a multi-dimensional digital twin model incorporating as-built information, live and historical operation data, interpreted information, and predictions; (2) automate facilities operation through an Artificial Intelligence model that analyzes the digital twin model and executes appropriate commands; (3) identify and predict issues and risks; (4) generate recommendations for improved facility operation; (5) predict building condition; (6) visualize integrated information in 2D, 3D, and AR environments, and (6) track the location of objects and personnel in a building and visualize them.

The disclosed system is applicable to a wide range of assets that have physical attributes, including but not limited to facilities such as buildings, metro stations, hotels, restaurants, stores, and warehouses, as well as infrastructures such as bridges, roads, and airports. The system's architecture is flexible and can be applied to any other asset that meets these criteria, such as farms.

The computer system described here incorporates the use of a series of devices installed throughout a facility or infrastructure to enhance the accuracy of the machine learning computer system by providing additional information. The selection of sensors used will vary depending on the specific use case. For instance, if the system is employed to monitor a facility for fire, temperature and flame sensors can be deployed to determine the extent of the fire. In another example, energy metering devices can be utilized for predicting energy consumption rates and optimizing the setpoints of HVAC systems to minimize energy consumption. The computer system has several components, which are listed below:
- IoT platform: This is the core for collecting live data. It consists of a broker that receives live data from devices and a listener that processes and parses the data the broker receives. The listener also checks for alerts and identifies whether any of the input information is out of the safe range.
- Database: This is where static and dynamic data are stored. It has two parts: a short-term memory and a long-term memory. The input data is first stored in the short-term database, and a snapshot of all the attributes in the short-term memory is created and stored in the long-term memory at regular intervals (currently set to 15 minutes). The short-term memory stores data received within the past 7 days. These snapshots not only help to reduce the size of the stored data, but also create a clean, time-stamped dataset that is suitable for AI-related tasks.
- Commander: This module communicates input commands from TwinUp to related devices.
- User-Interface: This is the interface module that enables users to interact with the information available in the digital twin. TwinUp is cloud-based and can be accessed from web browsers on tablets, phones, and computers.
- BIM importer: This module imports BIM models and extracts as-built information from them.
- Insight Engine: This module calculates insights based on a set of input attributes at regular intervals and stores the results in the long-term memory.
- Devices: These are the devices responsible for communicating with a network of devices. There are typically two types of devices in the network: (1) Endpoint devices: These devices sense/transmit data or control commands and are not directly connected to the internet; (2) Edge devices: These devices gather data from endpoint devices and issue commands to them. Edge devices can collect data, detect alerts, and perform data processing or filtering prior to transmitting the data to higher-level edge devices. Additionally, edge devices can be outfitted with sensors to gather data directly. An example of an edge device is the gateways that manage a network of devices. For interaction with Building Automation Systems, dataArrows has developed a gateway technology based on BACnet standards. BACnet stands for Building Automation and Control Network, which is an international open standard for communication with building automation systems developed by ASHRAE in 1987.

The developed gateway runs algorithms that are implemented in software specifically designed for them. The computer methods used for gateway devices can collect data, conduct rule checks on the data based on the semantics of the data, and send the filtered or processed data to the IoT platform. Data and alerts from gateway devices are combined in a database in the cloud or network-hosted server. Examples for the tasks that are run in the cloud include, but are not limited to:
- Defining and implementing additional rule checks on the collected data and database.
- Conducting data analysis and employing Machine Learning techniques on the alerts and collected/processed data.
- Offering functionality to modify streams of data in order to calibrate the sensed data without adjusting the devices.
- Displaying alerts and collected data in real-time in 2D, 3D, BIM, and AR environments.
- Visualizing alerts and collected data through graphs and charts.
- Highlighting entities and model objects associated with alerts and risks in 2D, 3D, and AR environments.
- Conducting AI-based prediction and insight generation, as well as identifying and predicting hazards.
- Generating recommendations for improving system operation.
- Facilitating autonomous operation of building systems.
- Displaying the live location of assets, people, and entities in the 3D environment.

The entity architecture is described in the following paragraphs.

The TwinUp platform inputs data from various sources and integrates it into a unified digital twin structure. While management of building information has traditionally been limited to design, construction, and maintenance data, which are mostly static or semi-static, integrating this information with real-time building operational data and the environment in which a building operates is a gap in the industry. Integrating static and dynamic building information is essential for creating operational digital twins in the building industry. Our solution addresses this issue by creating a digital twin of a building by aggregating digital twins of individual, but interrelated, entities. These entities are objects that have physical counterparts in the real world. TwinUp models the details related to each entity by building a cluster of data, information, and knowledge around it in five layers: 1) Static, 2) Dynamic, 3) Visualization, 4) Simulation, and 5) Interface. It leverages various technologies to collect data for each layer. These layers and related technologies are discussed below.

**Dynamic Layer:** Any operational information about the building that should be monitored or recorded continuously falls into this category. The information in this layer could be placed in five categories:
- Telemetry Data: This data is often preferred to be available in real time and is usually collected using the Internet of Things (IoT) technology. Examples include temperature, humidity, CO2 level, and occupancy status in building spaces. Live data is collected directly from devices or entered manually.
- Insights: This category houses the insights and predictions that could be generated based on the other information of the entity. Insights are calculated internally in TwinUp at intervals. An example of an insight is the comfort level of occupants, calculated based on the Indoor Air Quality (IAQ) sensors, or the prediction of energy consumption rate in a building zone. The procedure for calculating insights is discussed in the Miscellaneous Information section.
- Alerts: There are several conditional alert definitions available in TwinUp that enable users to define conditions for generating alerts based on the value of telemetry data or insights. Such alerts are hosted in this category.
- Tickets: An entity might have a ticket raised for it for further investigation. An example is when a user creates a ticket for fixing a malfunctioning Air conditioning (AC) unit in their apartment.
- Events: This category houses calendar events that are assigned to that entity.

**Static Layer:** This layer includes information that doesn't update frequently. The information in this layer could be placed in four categories:
- Properties: The information about the physical attributes of buildings falls into this category. Information in this class can be extracted from a BIM, which can capture architectural, discipline-specific engineering, and construction information. Examples include the size of spaces, the thermal properties of walls, and the number and size of windows included in space.
- Users: This is a list of users that have access to the entity. There are three types of users in TwinUp: 1) managers, 2) occupants, 3) and the public. Manager users have access to all entities and can make changes to the definition of the entities. Managers define what information about an entity should be available to occupants and public users of an entity. Occupants are users that are not managers but need to see the information about the entities that are relevant to them. Occupant users must be added to a facility before being assigned to an entity. Public users are individuals who are not occupants or managers of a building, but have access to certain information about an entity through an URL or QR code. They can view a filtered version of the entity's information, even without having an account on TwinUp. This allows building managers to share relevant information with visitors or interested parties. For example, a building visitor has the right to check the air quality of the building they are visiting.
- Tags: This is a list of keywords that a user can define to create relationships between entities. Tags not only help with searching for relevant entities, but they also help in the AI application of the entities by defining the similarity or relationship between entities. Using tags to define the ontology of entities is another application for tags.
- Attachments: This is a list of various files, notes, or links that a user wants to assign to an entity.

**Simulation Layer:** This layer includes simulation models of entities. These models can be used to predict and analyze the behavior of a given entity, such as the energy consumption of a zone based on HVAC setpoints, thermal loads, and the zone's geometry. These models can be simulated using mathematical or AI techniques, and are run as needed, rather than at regular intervals like insights.

**Visualization Layer:** The special architecture of entities enables users to access their information in several ways. It is important to note that entities are defined once, but can be represented and accessed in different ways. These include:
- List view: which provides a simple overview of the information. In this view, a list of entities is shown and the user can search by name, tags, and GUID.
- QR Code: Each entity has a URL (page) that can be accessed through a QR code that directs users to the page. TwinUp generates a QR code that can be printed and placed on related physical objects, allowing users to simply scan the QR code and access all the information contained in that entity.
- Augmented Reality: The architecture of the entities and QR codes is used in conjunction with AR technology to enable contactless interaction with building information. In this scenario, an application is developed for various AR devices that searches for QR codes. If the read URL belongs to an entity, the application opens the entity's page and displays it in the AR environment.
- 3D view: In this view, entities are assigned to related elements in 3D models. These models can be BIM models or generic models such as OBJ and FBX files. Users can access entity information by clicking on any of the related elements and selecting "show information." If the same attribute (such as temperature) belongs to multiple entities, a contour can be generated by color-coding the building elements based on the value of that attribute. Similarly, if any alerts are associated with an entity, the related elements are highlighted. This representation of information allows users to quickly understand the status of their buildings. For simplicity, each entity is also represented by a point (sprite) at a relevant location. Every element in a 3D model has a geometry and a placement in the 3D coordinate system. The geometry and coordinates of the elements assigned to an entity are used to calculate the sprite's coordinates. The shape, size, and color of an entity's sprite can be changed by the user for a better experience. When a user hovers over the sprites, the name of the related entity is displayed, and if clicked, a side panel will open to show the entity's information. A display mode is also defined for the 3D view that updates the information displayed on the screen at intervals. This mode is useful for cases where the user is interested in getting updated information, alerts, and contours displayed on the screen without interacting with the platform. A use case for this mode is displaying a contour of indoor air quality on a display monitor available to the public.
- 2D view: In this view, sprites are placed on a drawing or picture to represent the entities. TwinUp creates a layer on top of a picture or drawing for overlaying sprites. The user chooses the location of each sprite. As with the 3D view, a user can access the entity's information by clicking on it. To create a better experience, when a user zooms in/out, both layers zoom in/out so that the user feels the sprites are part of the picture or drawing. A user can also scale the size of the sprites for optimizing the experience.

**Interface Layer:** This layer includes information about the relationships between entities. It has two main functions: 1) allowing users to define systems of systems by creating a mechanism for specifying if an entity is a component of another entity, and 2) creating a way for replacing an entity with another one, as may happen in the real world (e.g., replacing windows or air filters). This layer includes the following main pieces of information:
- GUID: a globally unique identifier for an entity, serving as a unique name or key for each entity.
- Sub-entities: a list of entities that are components of the current entity. For example, boilers, air-handling units, and air filters may be sub-entities of an HVAC system.
- Predecessor: this attribute is filled out when an entity is replaced by another entity. An example scenario for this is replacing an equipment in a building system, where the entity for the older equipment will be replaced with a new entity representing the new equipment, while retaining the older entity and its historic data. In such cases, the older entity becomes a predecessor for the new entity, allowing for the tracking of historical data without linking it to the new entity, which may have different characteristics.
- Relationships: a list of relationships that relate one entity to other entities. An example is a relationship that defines two entities that are adjacent to one another. Such relationships are especially important in AI-based solutions; for example, two adjacent rooms in a building exchange heat; so in training an AI model for modeling the energy behavior of a building, it is important to take such relationships into the consideration.

Other miscellaneous information and definitions are described in the following paragraphs.

**Specifications:** Each insight, live data, and property, referred to as "attributes" in this context, has a specification that defines the details of these attributes. The main details defined in a specification include:
- Semantics: This defines the meaning of items. For example, temperature, humidity, and rotation angle of the window blind. The reason for defining semantics is that different devices and standards use different terms or abbreviations for the same concept. Using semantics allows users to unify all the attributes that refer to the same concept but have different names under one semantic.
- Unit: This specification item defines the unit of the attribute. - Access Level: This specification item defines what type of user can access an entity.
- Inheritability: This detail defines whether the supertype of the attributes should inherit it as an attribute. The idea is that in a system of systems, it is very inefficient to work with all the attributes of its sub-entities and sub-entities of its sub-entities. Such a mechanism allows users to see only the major attributes of sub-entities of an entity that matter. Additionally, this attribute could play an important role when the data of an entity is used to build an AI model. This mechanism filters out information that does not add value as an input feature in the AI model. Privacy is another application for the inheritability feature as it enables data streaming between entities while still providing a mechanism for keeping some of the attributes private.

**Insight Calculation Procedure:** The architecture of entities and the capability for defining the semantics of attributes in TwinUp allows for a unique way of generating insights. Insights are predefined algorithms that take a set of input attributes and generate new insight attributes. TwinUp offers a range of insights and users can choose which ones to activate in their facility. Once an insight is activated, TwinUp searches for entities that have all the input attributes required for the insight calculation. It then adds new insight attributes to the found entities and links them to insight calculation engines. Based on the semantics defined for the attributes, TwinUp can determine which attributes of an entity should be used for its insight calculations. Users can visit each entity and adjust the input attributes as needed. After insights are defined, a compute engine in TwinUp calculates new values for the insights based on the updated values of input attributes.

Using entity-based architecture for AI is described in the following paragraphs.

TwinUp's entity-based architecture significantly facilitates AI-related tasks. The entity definitions create a meaningful structure for a large number of data points available in the digital twin of a building by creating several data packages. This significantly enhances the accuracy of the model and reduces the cost and duration of model trainings. Additionally, the following features further facilitate AI-related tasks.
- Snapshots: TwinUp creates snapshots of buildings' status at intervals. There are two databases defined to keep track of building data: 1) short-term memory, and 2) long-term memory. The short-term memory stores all the data and insights that are generated within a past short period (currently set at 7 days). The long-term memory stores all the snapshots that are created at intervals (currently set at 15 minutes). These snapshots are critical for machine-learning purposes as we will be working with time-series data and need the live data and insights to have the same timestamp at intervals.
- Tags: This is critical for defining some characteristics that have an impact on the performance of a building. For example, the purpose of a space (e.g., office, storage, conference room) has an impact on energy performance and use schedule. Such characteristics can be simply defined by tags and used in machine learning models to be trained for the entities.
- Inheritability: There is a huge amount of data features in a building for various building systems. Using all these features for all AI-based use cases is very inefficient and expensive. Although some of the data in a system of systems may be relevant in a use case, it might be too detailed information that does not add meaningful value to the model. The inheritability feature filters out such information in super-entities. In this scenario, for models that are to be defined for super-entities, a user will simply pull data from the sub-entities to include only the data that actually matters to the use case.

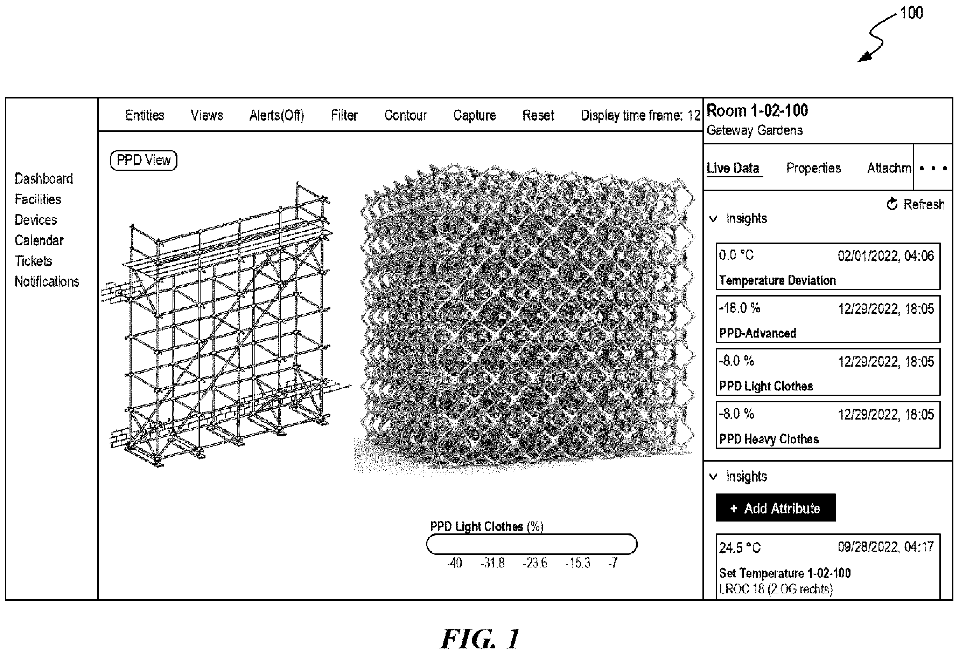

FIG. 1 illustrates the Graphical User Interface for the digital twin software. It includes a dashboard, function buttons, and panels for showing detailed information.

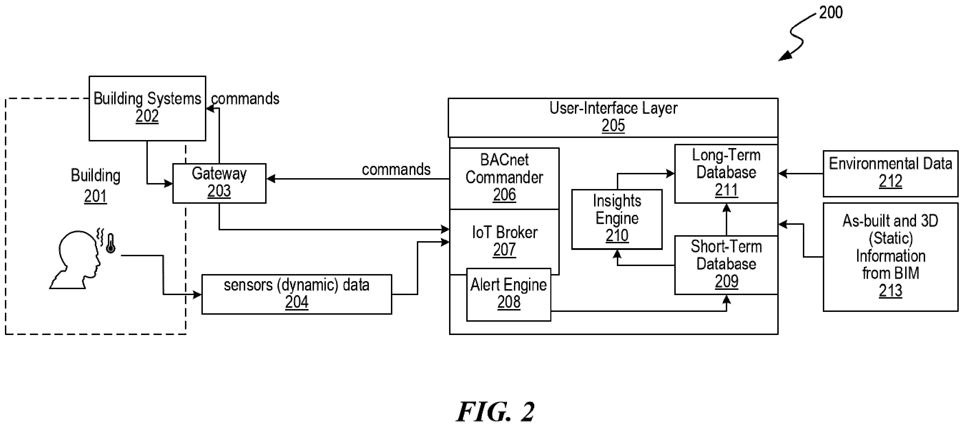

FIG. 2 illustrates the information flow within a digital twin technology system 200. Digital twin technology system 200 includes a building 201 integrated with cloud services 205-213. Building 201 can be an office building, a home, a university campus, a hospital, a school, etc. Each building 201 may include various building systems 202 as well as multiple sensors distributed throughout the premises. These sensors gather dynamic data 204 that is then communicated to the cloud either directly from a dynamic data system 204, or indirectly through a gateway 203 installed within building 201 to facilitate communication with building systems 202.

Building systems 202 include a single or group of building components that perform a certain task or sense or monitor certain attributes in a building. Examples are a Heating, Ventilation, and Air Conditioning (HVAC) system, a lighting system, an Air Quality system, a water leakage sensor, etc.

Dynamic data 204 includes data that is often preferred to be available in real-time and is usually collected using the Internet of Things (IoT) technology. Examples include temperature, humidity, CO2 level, and occupancy status in building spaces. Dynamic data is collected directly from devices or entered manually.

Upon reaching the cloud, dynamic data 204 is processed by an Internet of Things (IoT) Broker 207, which accepts dynamic data 204 in a specific JavaScript Object Notation (JSON) format. IoT Broker is an engine that receives IoT messages from Gateway 203 and Dynamic data 204 and delivers it to any engine (e.g., alert engine) that consumes these messages.

Dynamic data 204 is then evaluated by an Alert Engine 208 according to one or a list of alert rules. Alert Engine 208 is an engine that checks all the new data and insights against one or a list of predefined or user-defined alert conditions and generate an alert accordingly and notifies the users. Some alert rules include high CO2 level in a building, water leakage alert, fire alert, etc.

Raw data and associated alerts are temporarily stored in a Short-Term Database 209. Periodical, e.g., every 15 minutes, every 10 minutes, every 5 minutes, etc., snapshots of dynamic data 204 and other building data are compiled and transferred to a Long-Term Database 211 for historical analysis and record-keeping. Short-Term Database 209 may hold the information of the past few days, e.g., 7 days, 14 days, 21 days, etc., while Long-Term Database 211 may hold the information of a longer time period, e.g., 1 year, 5 years, or all the information that are stored in it since the beginning of storage. Short-Term Database 209 and Long-Term Database 211 are storage facilities that respectively, store high granularity short-term data and low granularity long-term data.

Concurrently, an Insights Engine 210 analyzes the raw data to generate actionable insights, which are also stored in Long-Term Database 211. Insight Engine 210 is an engine with a predefined or user-defined algorithm that periodically (every 15 minutes, 30 minutes, 1 hour, etc.) looks at Dynamic data 204 and any other data in the system to interpret information and store it in Short-Term Database 209 and/or Long-Term Database 211.

Additionally, environmental data 212 are sourced from external weather services and other environmental services and added to Long-Term Database 211 to enrich the database with comprehensive contextual information about building 201 and its surroundings. Other environmental services include water quality data, outdoor air pollution data, wildfire alert systems, etc.

Users can access, interact with, and interpret all this information through a User-Interface Layer 205 of cloud services 205-213. User-Interface Layer 205 is any interface that enables a user to monitor, control, check alerts, or modify the information in System 200. Examples include a web application, a mobile app, or an Artificial Intelligence (AI) voice and chat assistance.

If there is a need to modify building systems 202 or if an automated action is triggered, commands are sent through a Building Automation and Control Network (BACnet) Commander 206. BACnet stands for Building Automation and Control Network, which is an international open standard for communication with building automation systems developed by ASHRAE in 1987. A BACnet gateway is a device that can communicate with a building system that has implemented BACnet standard. BACnet Commander 206 is a unit that can send a system- or user-generated commands to a BACnet gateway. BACnet gateway is a type of Gateway system 202 that can communicate data and commands with Building systems 202 that supports BACnet protocol.

Gateway 203 receives these commands and communicates the necessary instructions to the relevant building systems 202. Moreover, as-built data 213, such as three-dimensional (3D) models or drawings, can be uploaded and stored within cloud services 205-213, offering a detailed static representation of the building's physical and functional characteristics. As-built data 213 can further include any form of information such as pictures, a spreadsheet, a user-generated ticket, a list of manually-input attributes or data, or a digital file.

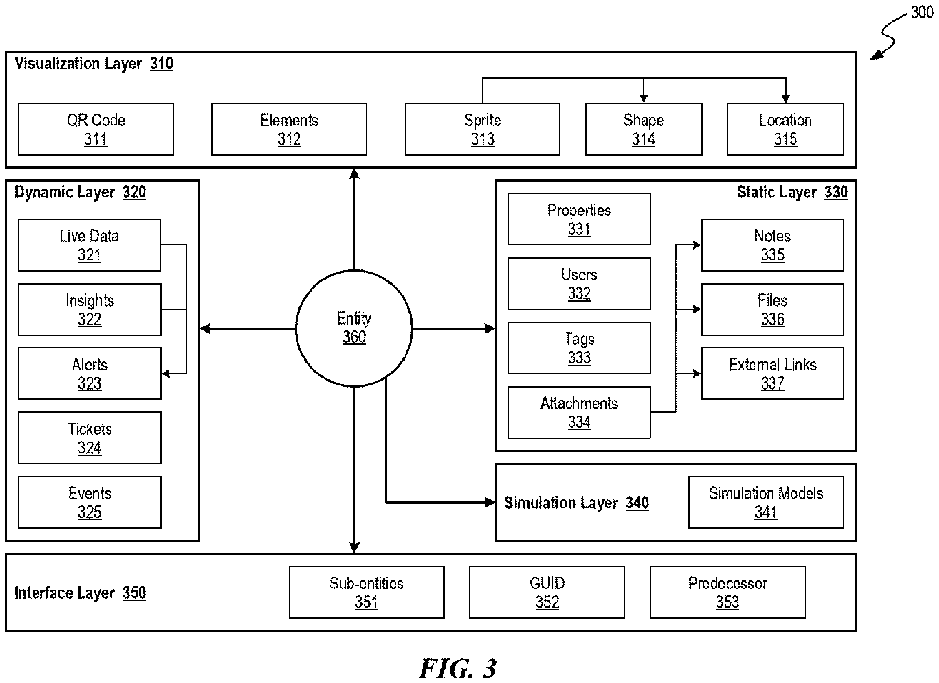

FIG. 3 illustrates the entity architecture of a platform 300, which is designed to create operational digital twins in the building industry by integrating both static and dynamic building information. The platform inputs, processes, and communicate data from various sources into five interconnected layers to form a comprehensive digital twin structure, each layer contributing a different aspect of the operation.

At the core of the system is Entity 360, which represents the physical counterpart in the real world and is surrounded by the five layers. The Dynamic Layer 320 includes operational information such as live telemetry data 321, insights 322, alerts 323, tickets 324, and events 325. The Static Layer 330 encompasses more constant data like properties 331, users 332, tags 333, and attachments 334.

The Visualization Layer 310 provides multiple modes of accessing and representing entity data, with components like QR codes 311, list elements 312, augmented reality sprites 313, shapes 314, and physical location coordinates 315.

The Simulation Layer 340 contains the simulation models 341 used to predict and analyze the behavior of entities, while the Interface Layer 350 facilitates interactions between entities, detailing their relationships through sub-entities 351, unique identifiers GUIDs 352, and historical data links to predecessors 353.

Each layer works together to ensure that the digital twin is not only a static model but a dynamic and interactive system capable of evolving with the building's operations, providing users with a detailed and operational overview of the building environment.

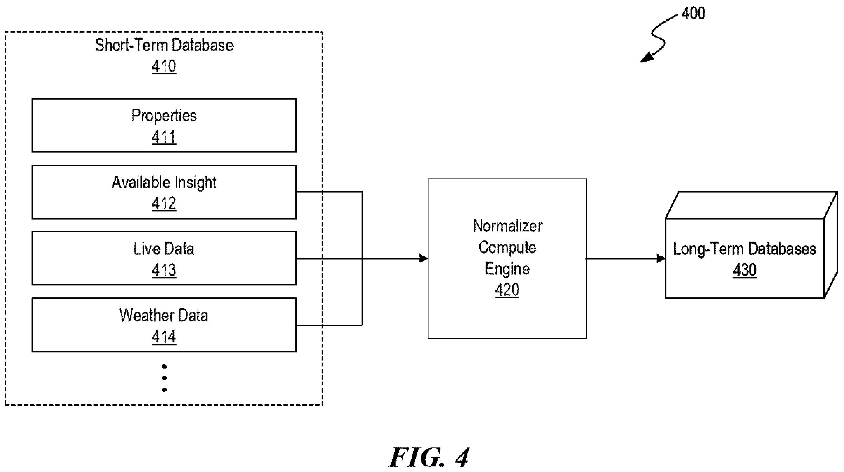

FIG. 4 illustrates the data processing framework within digital twin technology system 400, showcasing the flow from short-term to long-term data storage. The system includes a Short-Term Database 410, which acts as the immediate repository for various categories of building-related data. This database holds various data such as Properties 411, which represents the static aspects of the building; Available Insight 412, which includes processed data and forecasts; Live Data 413, capturing real-time operational data; and Weather Data 414, incorporating external environmental information.

The Normalizer Compute Engine 420, is a crucial processing unit that harmonizes and prepares data for long-term storage and analysis. It summarizes the data from the short-term memory for the duration of the intervals and output summaries with potentially lower volumes of data. It also ensures that incoming data from Short-Term Database 410 adheres to a consistent format and structure, facilitating efficient data analysis and retrieval. The processed data is then transferred to Long-Term Databases 430, where it is stored for extended periods.

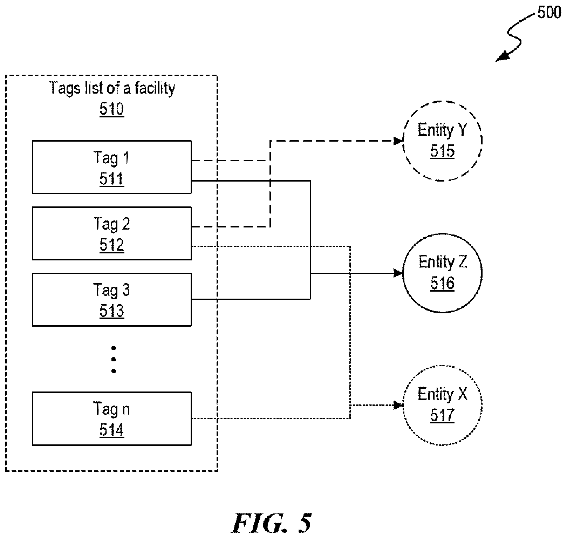

FIG. 5 illustrates the organizational structure of a facility's digital twin within system 500, focusing on the use of tags to define and navigate the relationships between various entities. The Tags List of a Facility 510 serves as a categorization system, where each Tag, such as Tag 1 511 to Tag n 514, represents a keyword or characteristic that is associated with one or more entities within the facility. These tags act as a relational bridge, linking individual entities such as Entity Y 515, Entity Z 516, and Entity X 517, to shared attributes or functions defined by the tags. The diagram shows how multiple tags can be assigned to a single entity, as well as how a single tag can apply to multiple entities, establishing a complex network of relationships.

System 500 enables a nuanced and flexible approach to managing and analyzing the facility's operations by grouping entities according to shared characteristics, which are essential for machine learning applications and for enhancing the building's performance evaluation. The use of tags facilitates efficient searching and interaction with the digital twin platform, improving the Al's ability to recognize patterns and similarities between the connected entities.

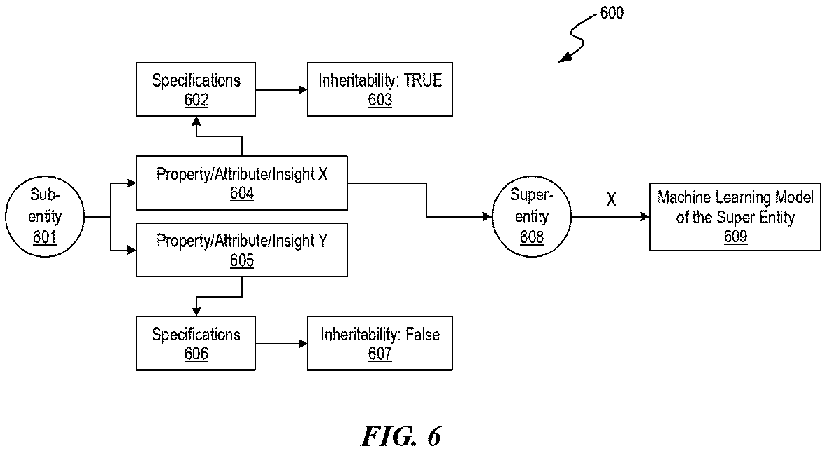

FIG. 6 illustrates the data inheritance mechanism within the digital twin system 600, specifically demonstrating how properties and insights from sub-entities are utilized in the context of a super-entity. At the foundation of this structure, Sub-entity 601 contains a set of specifications 602 and attributes/insights such as Property/Attribute/Insight X 604 and Property/Attribute/Insight Y 605. Each of these attributes includes an inheritability status, with Inheritability: TRUE 603 indicating that the data can be inherited by the super-entity.

The Super-entity 608 represents a higher-level aggregation of sub-entities, such as a complete building system made up of various components. This super-entity can selectively inherit attributes from the sub-entities based on the inheritability criteria, as indicated by the flow from the inheritable attributes 604, 605 to the super-entity 608.

A key feature in this framework is the Machine Learning Model for super-entities, such as the Super Entity 609, which is designed to utilize the inherited properties and insights from the sub-entities to create predictive models and analytics. The inheritability feature streamlines the data used in AI-based use cases by excluding the non-inheritable specifications such as Specification 606 and Inheritability: False 607, ensuring that only relevant and value-adding data is used. This selective data inheritance facilitates efficient and targeted machine learning processes, leading to more accurate predictions and insights for the management of the super-entity within the digital twin environment.

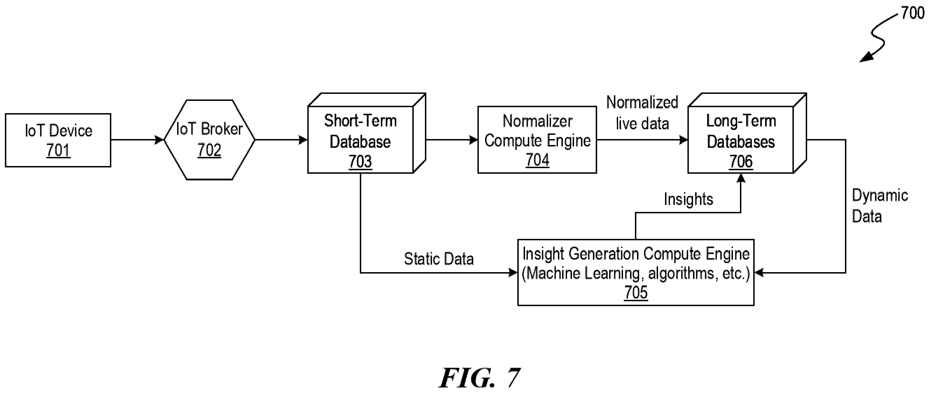

FIG. 7 illustrates the data flow and processing sequence within the digital twin system 700, focusing on the generation of insights from both static and dynamic data sources. The process begins with an IoT Device 701, which collects live data and sends it to the IoT Broker 702. This broker acts as an intermediary that parses the data and ensures the data is appropriately formatted and routed to the Short-Term Database 703, where it is held temporarily.

In parallel, static data, which does not change as frequently, is directed into the Short-Term Database 703. From there, both static and dynamic data flow into the Normalizer Compute Engine 704. Here, snapshots of the building's status are taken at set intervals (e.g., every 5 minutes, 10 minutes, 15 minutes, 60 minutes, etc.) and/or summarized (e.g., an average of values, summation of values, maximum of values) and preserved for historical analysis and machine learning applications. This engine summarizes information for set intervals, and standardizes the data format, making it uniform and suitable for long-term storage and analysis. The normalized live data is then stored in the Long-Term Databases 706.

Additionally, an Insight Generation Compute Engine 705 takes both static and dynamic data as input and uses machine learning algorithms and other computational techniques to generate insights. These insights are also directed into the Long-Term Databases 706, contributing to the time-series data essential for understanding patterns and trends within the digital twin system.

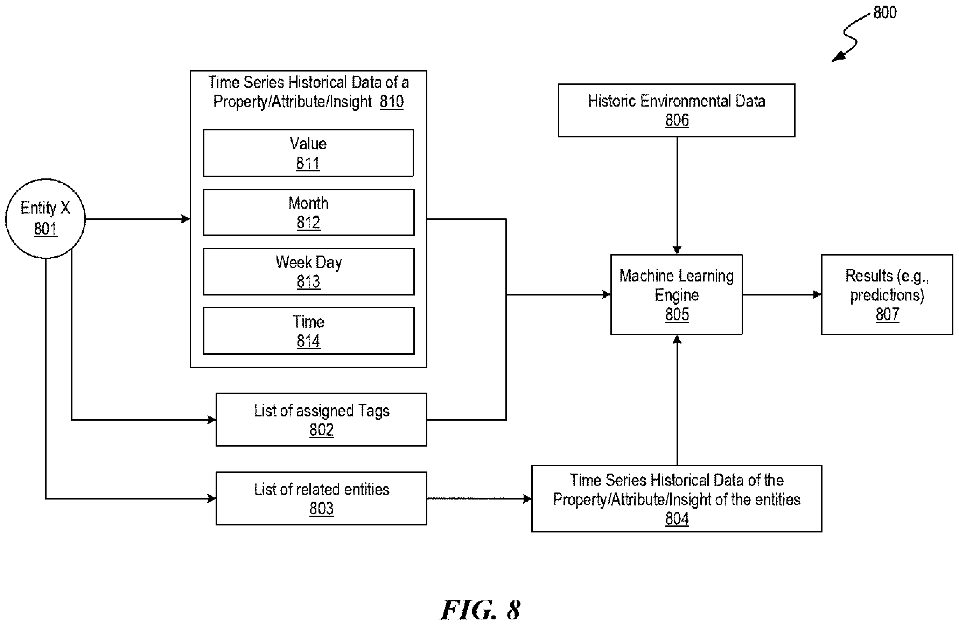

FIG. 8 illustrates the machine learning model training process supported by the structure of entities within the system 800.

Although models can be trained for one entity or a set of entities, data aggregation starts with collection the information of entities, such as Entity X 801, which is connected to a comprehensive dataset that includes Time Series Historical Data of a Property/Attribute/Insight 810. This dataset is detailed with individual records such as Value 811, Month 812, Week Day 813, and Time 814, providing a granular temporal context to the attributes or insights of Entity X.

Further relational context is provided through a List of assigned tags, such as Tags 802, which categorizes Entity X for easier identification and association with similar entities or attributes within the system. Additionally, a list of related entities, such as List of entities 803 defines the connections between Entity X and other entities, enhancing the relational understanding and potential interdependencies within the system.

This collective data is then fed into the Machine Learning Engine 805, which also incorporates Historic Environmental Data 806, such as weather data, to enrich the analysis with environmental factors that may influence or correlate with the attributes of Entity X.

The Machine Learning Engine 805 processes this multidimensional data to extrapolate patterns and generate Results 807, such as predictions or insights. These results can inform decision-making processes, optimize operational strategies, and predict future trends or needs within the system, ultimately contributing to the intelligent management and evolution of the system represented by system 800.

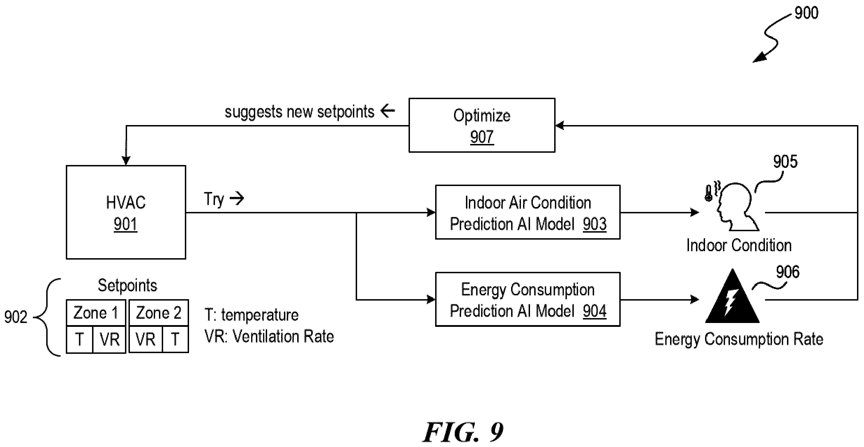

FIG. 9 illustrates the workflow of an autonomous system for optimizing Heating, Ventilation, and Air Conditioning (HVAC) operations within system 900. The system integrates artificial intelligence to enhance efficiency and comfort in building management.

At the start, HVAC 901 receives initial setpoints 902 for HVAC setpoints such as temperature (T) and ventilation rate (VR) for different zones, such as Zone 1 and Zone 2. These setpoints serve as the trial inputs for the two AI prediction models.

The Indoor Air Condition Prediction AI Model 903 processes the setpoints to forecast the resultant indoor air conditions, predicting outcomes such as temperature and humidity levels, which are essential for occupant comfort depicted by icon 905.

Simultaneously, the Energy Consumption Prediction AI Model 904 uses the setpoints to estimate the energy consumption rate, symbolized by the lightning bolt icon 906. This model predicts how changes in setpoints will affect the building's energy usage, an important factor for operational cost and energy conservation.

Based on the predictions from both AI models, the Optimize module 907 analyzes the outcomes and suggests new setpoints for the HVAC system. These suggestions aim to balance and enhance indoor air conditions for comfort while minimizing energy consumption, thus optimizing the overall performance of the HVAC system. The loop suggests iterative improvements, constantly refining the setpoints to achieve optimal conditions.

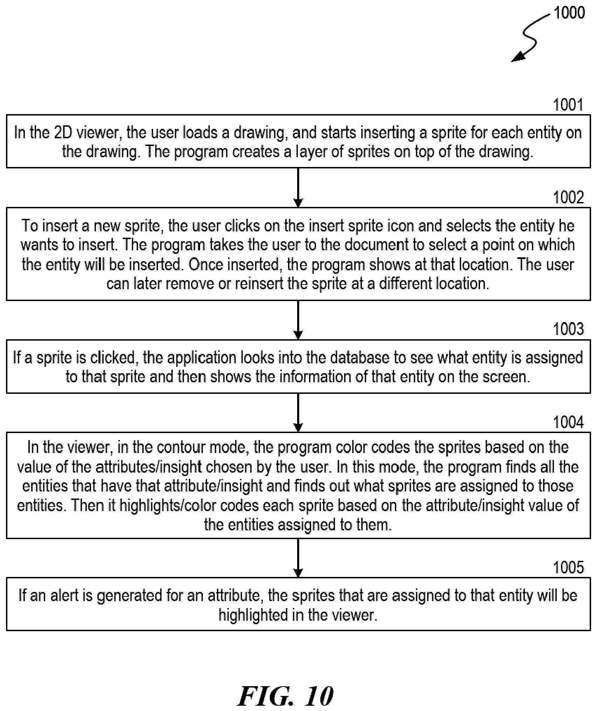

FIG. 10 is a flow chart for a method 1000 assigning attributes to entities in a two-dimensional (2D) viewer. At operation 1001, the user loads a drawing in the 2D viewer, and starts inserting a sprite for each entity on the drawing. The program creates a layer of sprites on top of the drawing. At operation 1002, the user inserts a sprite by clicking on the insert sprite icon and selects the entity he wants to insert. The program takes the user to the document to select a point on which the entity will be inserted. Once inserted, the program shows the sprite at that location. The user can later remove or reinsert the sprite at a different location. Upon clicking on a sprite, through operation 1003, the application looks into the database to see what entity is assigned to that sprite and then shows the information of that entity on the screen. At operation 1004, which takes place when the user tries to see the sprites in contour mode in a 2D viewer, the program color codes the sprites based on the value of the attributes/insight chosen by the user. In this mode, the program finds all the entities that have that attribute/insight and finds out what sprites are assigned to those entities. Then it highlights/color codes each sprite based on the attribute/insight value of the entities assigned to them. At operation 1005, if an alert is generated for an attribute, the sprites that are assigned to that entity will be highlighted in the viewer.

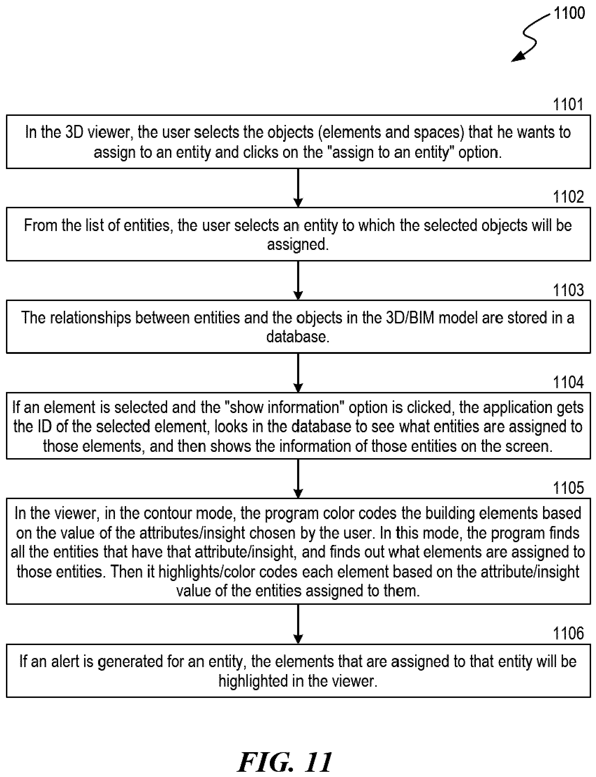

FIG. 11 is a flow chart detailing a method 1100 for integrating entities with objects in a three-dimensional (3D) viewer. At operation 1101, the user selects the objects within the 3D viewer and chooses the "assign to an entity" option to begin the integration process. At operation 1102, the user is presented with a list of entities to which the selected objects can be assigned, and the user makes a selection.

The system then proceeds to operation 1103, where the established relationships between the entities and the objects in the 3D/BIM model are stored within a database. This creates a structured network that links digital entities to their corresponding physical counterparts.

At operation 1104, if a user selects an element and chooses to "show information," the application queries the database to retrieve and display information on the screen for the entities associated with that element.

Moving to operation 1105, the viewer has a contour mode that, when activated, color codes the building elements based on the value of the selected attributes or insights. This operation involves the system identifying all entities with the chosen attribute or insight and updating the visual display of each element to reflect this data.

Finally, at operation 1106, if the system generates an alert for a particular entity, the elements associated with that entity are automatically highlighted within the viewer. This visual cue allows users to quickly identify and respond to issues indicated by the alert.

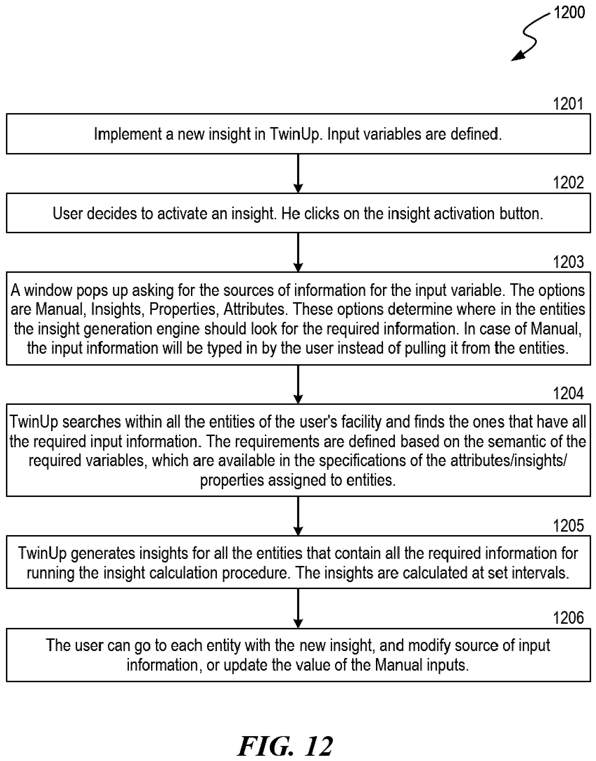

FIG. 12 is a flow chart 1200 outlining the process for setting up and calculating insights for entities within a facility management system called TwinUp. At operation 1201, the user implements a new insight in TwinUp by defining the necessary input variables.

The process progresses to operation 1202, where the user decides to activate this insight by clicking on the insight activation button within the interface. Following this, operation 1203 involves a prompt to the user from a pop-up window requesting the sources of information for the input variable, which can be Manual, Insights, Properties, or Attributes. These selections dictate where the insight generation engine will search for the needed data, whether entered manually by the user or retrieved from the entities' attributes.

At operation 1204, TwinUp conducts a search across all the entities within the user's facility to locate those that possess all the required input information, as defined by the semantic requirements of the required variables.

Subsequently, at operation 1205, TwinUp generates insights for all entities that hold the necessary information for the insight calculation procedure. These insights are produced at predetermined intervals.

Finally, operation 1206 allows the user to engage with each entity that has been endowed with the new insight. Users can modify the source of input information or update the values of manual inputs, completing the loop of insight generation and application within the facility's ecosystem.

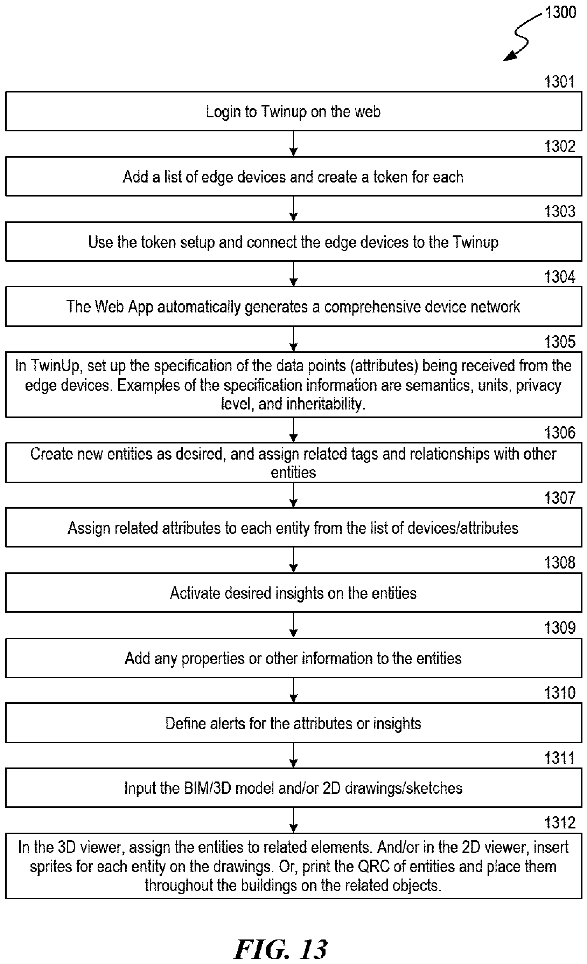

FIG. 13 presents a flow chart 1300 that outlines the comprehensive data flow and setup process within a computer system, such as the TwinUp platform. The sequence begins at operation 1301, where the user logs into TwinUp via the web interface.

At operation 1302, the user adds a list of edge devices and generates a unique token for each, establishing a secure connection point for the devices. Following this, operation 1303 involves utilizing the tokens to connect the edge devices to the TwinUp system.

Operation 1304 sees the Web App automatically generating a comprehensive network of devices. Proceeding to operation 1305, the user sets up specifications for the data points (attributes) being received from the edge devices, including details such as semantics, units, privacy level, and inheritability.

Next, at operation 1306, the user creates new entities as needed and assigns related tags and relationships with other entities to form a structured digital ecosystem. At operation 1307, attributes related to each entity are assigned from the aggregated list of devices and attributes.

Operation 1308 entails activating the desired insights on the entities, which allows for advanced data processing and analysis. Adding further detail to the digital twin, operation 1309 involves adding any additional properties or other relevant information to the entities.

Continuing to operation 1310, the user defines alerts for the attributes or insights, setting up a system of notifications for particular conditions or thresholds. At operation 1311, the user inputs the Building Information Modeling (BIM) or 3D model and/or 2D drawings/sketches into the system, which serves as a visual representation of the physical environment.

Finally, at operation 1312 in the 3D viewer, entities are assigned to corresponding elements. Alternatively, in the 2D viewer, sprites for each entity are inserted on the drawings. Users may also print QR codes (QRC) of entities and physically place them throughout the building on the related objects, thereby integrating the digital and physical spaces within the TwinUp platform.

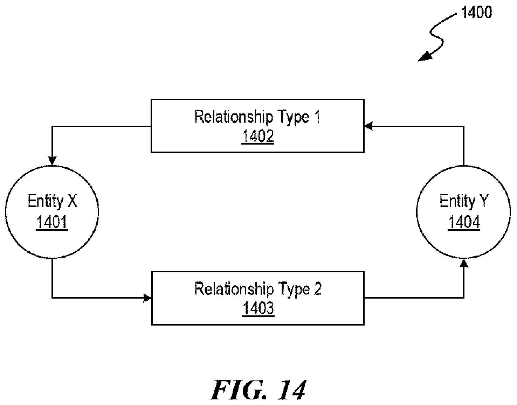

FIG. 14 illustrates the relational framework within the digital twin system 1400, detailing the interconnections between two example entities. Entities can have one or many relationships and dependencies. The diagram provides an example case where Entity X 1401 is connected to Entity Y 1404 through two distinct types of relationships.

Relationship Type 1 1402 illustrates one form of linkage between the entities, which may encapsulate a certain kind of data flow or interaction criterion within the system. Relationship Type 2 1403 demonstrates an alternative form of connection that differs from the first, suggesting a separate dimension or context of the relationship.

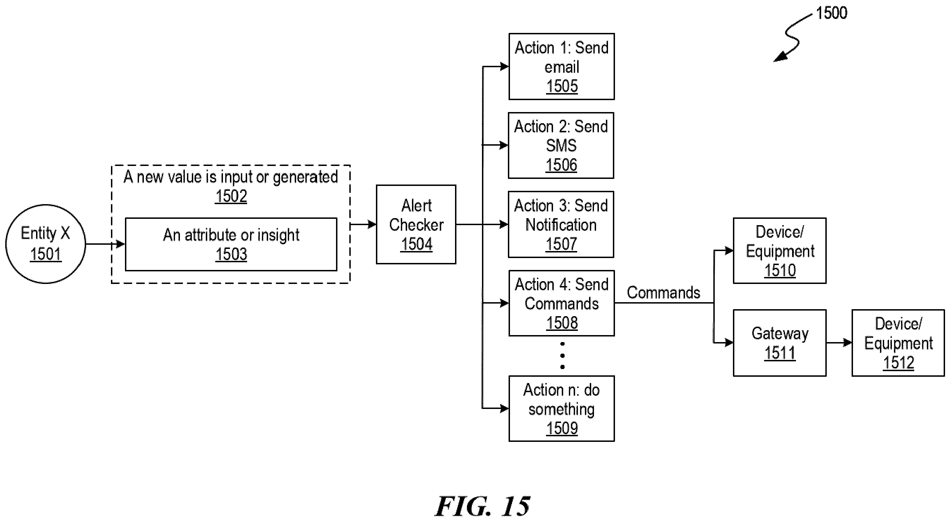

FIG. 15 illustrates the alert management and response workflow within the digital twin system 1500. When in Entity X, a new value is input or generated 1502, such as an update in an attribute or insight 1503, this new information is passed to the Alert Checker 1504, which scrutinizes the incoming data against predetermined criteria for anomalies or significant events. If an alert condition is met, the system responds with a sequence of actions, numbered from 1505 to 1509. These actions are potential responses to the identified condition and range from sending emails (1505) and SMS messages (1506), to issuing notifications (1507), and executing commands (1508) intended for the system's devices or equipment 1510, or through a gateway 1511 to additional equipment 1512. Action n (1509) indicates that the system has the capacity to perform other specified actions as required, ensuring a comprehensive and adaptable response mechanism. Overall, FIG. 15 shows how the digital twin system 1500 is capable of translating data changes into actionable alerts and commands to maintain operational efficiency and address system conditions proactively.

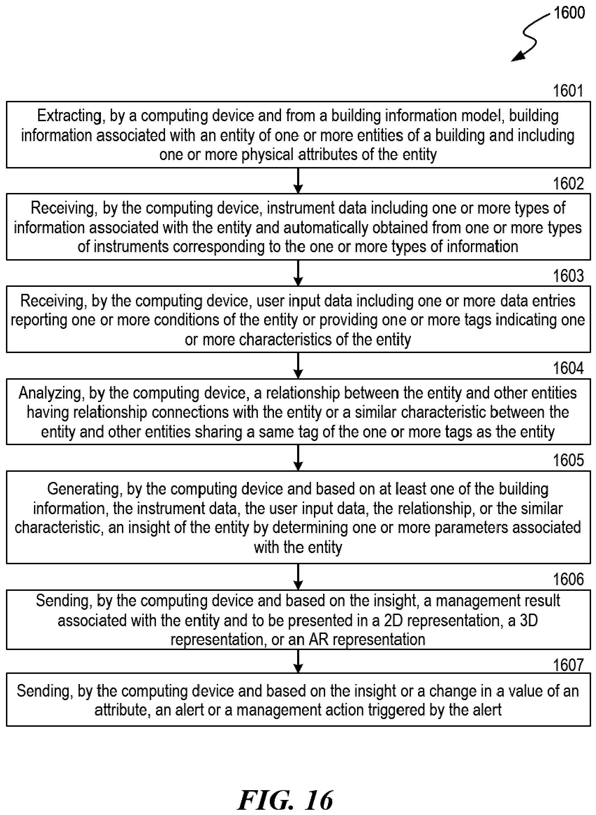

FIG. 16 is an example flowchart for managing a building on an entity level. The method is of modeling and managing a building on an entity level by dividing the building and its related information into one or more entities, where a management result is presented in a two-dimensional (2D) representation, a three-dimensional (3D) representation, or an augmented reality (AR) representation.

Operation 1601 includes extracting, by a computing device and from a building information model, building information associated with an entity of the one or more entities of the building and including one or more physical attributes of the entity.

Operation 1602 includes receiving, by the computing device, instrument data including one or more types of information associated with the entity and automatically obtained from one or more types of instruments corresponding to the one or more types of information.

Operation 1603 includes receiving, by the computing device, user input data including one or more data entries reporting one or more conditions of the entity or providing one or more tags indicating one or more characteristics of the entity.

Operation 1604 includes analyzing, by the computing device, a relationship between the entity and other entities having relationship connections with the entity or a similar characteristic between the entity and other entities sharing a same tag of the one or more tags as the entity.

Operation 1605 includes generating, by the computing device and based on at least one of the building information, the instrument data, the user input data, the relationship, or the similar characteristic, an insight of the entity by determining one or more parameters associated with the entity.

Operation 1606 includes sending, by the computing device and based on the insight, the management result associated with the entity and to be presented in the 2D representation, the 3D representation, or the AR representation.

Operation 1607 includes sending, by the computing device and based on the insight or a change in a value of an attribute, an alert or a management action triggered by the alert.

In some embodiments, dividing the building into the one or more entities includes extracting, by the computing device and from the building information model, a number of data points representing a digital structure of the building; and organizing, by the computing device, the number of data points into one or more data packages, where each data package of the one or more data packages represents an entity of the one or more entities.

In some embodiments, dividing the building into the one or more entities includes receiving manually designated data points representing a digital structure of the building as the one or more entities.

In some embodiments, the method further includes storing periodically, by the computing device, one or more of the building information, the instrument data, the user input data, the relationship, the similar characteristic, the insight, the management result, the alert, or the management action into a long-term data structure, where the long-term data structure is used to improve a capability of the computing device to generate insights.

In some embodiments, the method further includes grouping and filtering, by the computing device and based on relevance, one or more of the building information, the instrument data, the user input data, the relationship, or the similar characteristic to generate filtered data, where generating the insight of the entity is further based on the filtered data.

In some embodiments, the method further includes dividing, by the computing device, the entity into one or more sub-entities, where each sub-entity of the one or more sub-entities includes a portion of data points possessed by the entity; and generating, by the computing device, one or more insights, attributes, or properties of the one or more sub-entities, where generating the insight of the entity further includes combining the one or more insights, attributes, or properties of the one or more sub-entities.

In some embodiments, sending the management result to be presented in the 2D representation, the 3D representation, or the AR representation includes one or more of the following: adding a layer on top of a 2D drawing, inserting a customizable icon for the entity on the layer, and allowing access to information associated with the entity in a 2D viewer; assigning one or more objects of a 3D model to the entity and allowing the entity and information associated with the entity to be illustrated in a 3D environment; or providing the entity with a globally unique identifier (GUID) and a corresponding quick response code (QRC), enabling access to information associated with the entity through scanning the QRC, and displaying the information in an AR environment.

In some embodiments, receiving the instrument data includes receiving measurement data automatically measured by one or more types of sensors.

In some embodiments, receiving the user input data includes receiving one or more of a user-entered ticket, a user-entered property, or a user-entered note.

In some embodiments, analyzing the relationship between the entity and the other entities having relationship connections with the entity includes analyzing one or more events associated with the other entities having relationship connections with the entity and one or more management actions in response to the one or more events.

In some embodiments, generating the insight includes generating a time series of insights based on a long-term database or a series of snapshots.

In some embodiments, generating the insight includes identifying required input information based on the relationship or the one or more tags.

In some embodiments, generating the insight includes integrating a static building information model and live operation data using an entity-based architecture.

In some embodiments, sending the alert or the management action includes sending the alert or the management action to an equipment, a system, or a building unit represented by the entity.

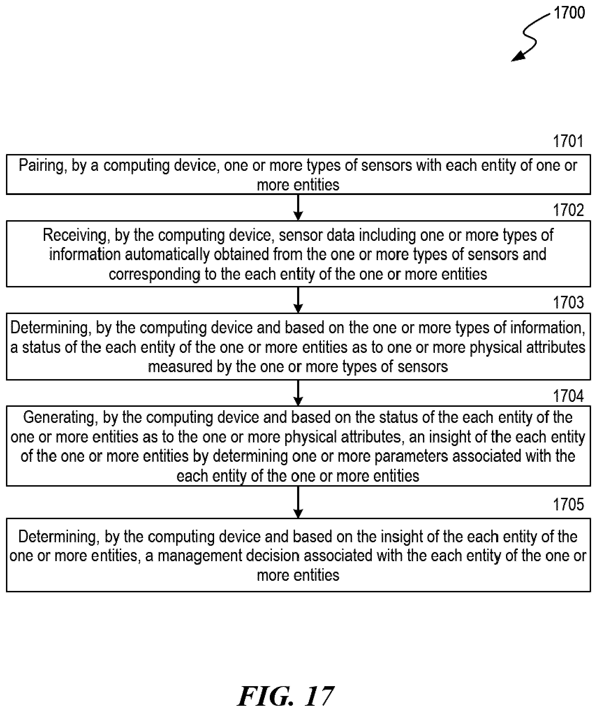

FIG. 17 is an example flowchart for collecting and using sensor data. The method is of collecting sensor data and using the sensor data to manage a building on an entity level by dividing the building and its related information into one or more entities.

Operation 1701 includes pairing, by a computing device, one or more types of sensors with each entity of the one or more entities.

Operation 1702 includes receiving, by the computing device, the sensor data including one or more types of information automatically obtained from the one or more types of sensors and corresponding to the each entity of the one or more entities.

Operation 1703 includes determining, by the computing device and based on the one or more types of information, a status of the each entity of the one or more entities as to one or more physical attributes measured by the one or more types of sensors.

Operation 1704 includes generating, by the computing device and based on the status of the each entity of the one or more entities as to the one or more physical attributes, an insight of the each entity of the one or more entities by determining one or more parameters associated with the each entity of the one or more entities.

Operation 1705 includes determining, by the computing device and based on the insight of the each entity of the one or more entities, a management decision associated with the each entity of the one or more entities.

In some embodiments, the one or more types of sensors include at least one of the following: a temperature sensor, a humidity sensor, a carbon monoxide sensor, a pressure sensor, a proximity sensor, a motion detector, a smoke detector, an air quality sensor, a gas detector, a current sensor, or an occupancy sensor.

In some embodiments, the method further includes determining, by the computing device and based on the management decision associated with the each entity of the one or more entities, a management action for the building.

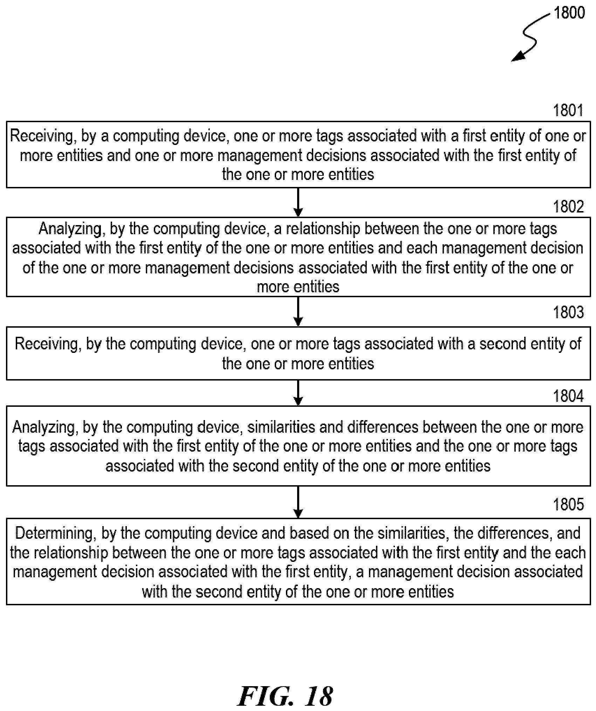

FIG. 18 is an example flowchart for analyzing and using tag data. The method is of analyzing tag data and using the tag data to manage a building on an entity level by dividing the building and its related information into one or more entities.

Operation 1801 includes receiving, by a computing device, one or more tags associated with a first entity of the one or more entities and one or more management decisions associated with the first entity of the one or more entities.

Operation 1802 includes analyzing, by the computing device, a relationship between the one or more tags associated with the first entity of the one or more entities and each management decision of the one or more management decisions associated with the first entity of the one or more entities.

Operation 1803 includes receiving, by the computing device, one or more tags associated with a second entity of the one or more entities.

Operation 1804 includes analyzing, by the computing device, similarities and differences between the one or more tags associated with the first entity of the one or more entities and the one or more tags associated with the second entity of the one or more entities.

Operation 1805 includes determining, by the computing device and based on the similarities, the differences, and the relationship between the one or more tags associated with the first entity and the each management decision associated with the first entity, a management decision associated with the second entity of the one or more entities.

In some embodiments, the method further includes determining, by the computing device, a relationship between the one or more tags associated with the second entity of the one or more entities and the management decision associated with the second entity of the one or more entities.

In some embodiments, the method further includes generating, by the computing device and based on the relationship between the one or more tags associated with the second entity and the management decision associated with the second entity, an insight of the second entity by determining one or more parameters associated with the second entity.

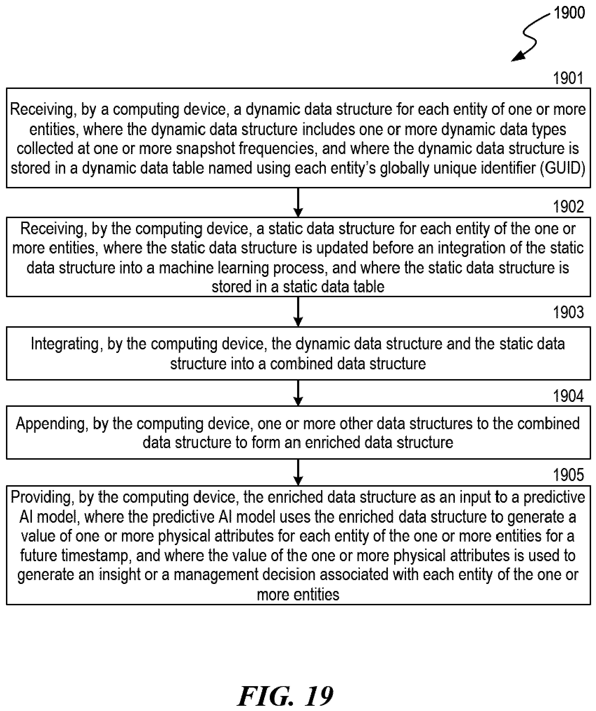

FIG. 19 is an example flowchart for using a predictive artificial intelligence (AI) model to manage a building. The method is of using a predictive artificial intelligence (AI) model to manage a building on an entity level by dividing the building and its related information into one or more entities, where the predictive AI model is a multi-input multi-output system.

Operation 1901 includes receiving, by a computing device, a dynamic data structure for each entity of the one or more entities, where the dynamic data structure includes one or more dynamic data types collected at one or more snapshot frequencies, and where the dynamic data structure is stored in a dynamic data table named using each entity's globally unique identifier (GUID).

Operation 1902 includes receiving, by the computing device, a static data structure for each entity of the one or more entities, where the static data structure is updated before an integration of the static data structure into a machine learning process, and where the static data structure is stored in a static data table.

Operation 1903 includes integrating, by the computing device, the dynamic data structure and the static data structure into a combined data structure.

Operation 1904 includes appending, by the computing device, one or more other data structures to the combined data structure to form an enriched data structure.

Operation 1905 includes providing, by the computing device, the enriched data structure as an input to the predictive AI model, where the predictive AI model uses the enriched data structure to generate a value of one or more physical attributes for each entity of the one or more entities for a future timestamp, and where the value of the one or more physical attributes is used to generate an insight or a management decision associated with each entity of the one or more entities.

In some embodiments, the dynamic data structure includes at least one of the following: a timestamp; a semantic name; a semantic unit; a semantic value; a semantic rule; or a time and date representation.

In some embodiments, the static data structure includes at least one of the following: an entity GUID; a facility number; a geolocation; a spatial coordinate; an entity identifier (ID); a property semantic; a facility tag; or a related entity.

Example 1: A method of modeling and managing a building on an entity level by dividing the building and its related information into one or more entities, wherein a management result is presented in a two-dimensional (2D) representation, a three-dimensional (3D) representation, or an augmented reality (AR) representation, the method comprising:
extracting, by a computing device and from a building information model, building information associated with an entity of the one or more entities of the building and comprising one or more physical attributes of the entity;
receiving, by the computing device, instrument data comprising one or more types of information associated with the entity and automatically obtained from one or more types of instruments corresponding to the one or more types of information;
receiving, by the computing device, user input data comprising one or more data entries reporting one or more conditions of the entity or providing one or more tags indicating one or more characteristics of the entity;
analyzing, by the computing device, a relationship between the entity and other entities having relationship connections with the entity or a similar characteristic between the entity and other entities sharing a same tag of the one or more tags as the entity;
generating, by the computing device and based on at least one of the building information, the instrument data, the user input data, the relationship, or the similar characteristic, an insight of the entity by determining one or more parameters associated with the entity;
sending, by the computing device and based on the insight, the management result associated with the entity and to be presented in the 2D representation, the 3D representation, or the AR representation; and
sending, by the computing device and based on the insight or a change in a value of an attribute, an alert or a management action triggered by the alert.

Example 2: The method of example 1, wherein dividing the building into the one or more entities comprises:
extracting, by the computing device and from the building information model, a plurality of data points representing a digital structure of the building; and
organizing, by the computing device, the plurality of data points into one or more data packages, wherein each data package of the one or more data packages represents an entity of the one or more entities.

Example 3: The method of example 1, wherein dividing the building into the one or more entities comprises receiving manually designated data points representing a digital structure of the building as the one or more entities.

Example 4: The method of any of examples 1-3, further comprising storing periodically, by the computing device, one or more of the building information, the instrument data, the user input data, the relationship, the similar characteristic, the insight, the management result, the alert, or the management action into a long-term data structure, wherein the long-term data structure is used to improve a capability of the computing device to generate insights.

Example 5: The method of any of examples 1-4, further comprising grouping and filtering, by the computing device and based on relevance, one or more of the building information, the instrument data, the user input data, the relationship, or the similar characteristic to generate filtered data, wherein generating the insight of the entity is further based on the filtered data.

Example 6: The method of any of examples 1-5, further comprising:
dividing, by the computing device, the entity into one or more sub-entities, wherein each sub-entity of the one or more sub-entities comprises a portion of data points possessed by the entity; and
generating, by the computing device, one or more insights, attributes, or properties of the one or more sub-entities, wherein generating the insight of the entity further comprises combining the one or more insights, attributes, or properties of the one or more sub-entities.

Example 7: The method of any of examples 1-6, wherein sending the management result to be presented in the 2D representation, the 3D representation, or the AR representation comprises one or more of the following:
adding a layer on top of a 2D drawing, inserting a customizable icon for the entity on the layer, and allowing access to information associated with the entity in a 2D viewer;
assigning one or more objects of a 3D model to the entity and allowing the entity and information associated with the entity to be illustrated in a 3D environment; or
providing the entity with a globally unique identifier (GUID) and a corresponding quick response code (QRC), enabling access to information associated with the entity through scanning the QRC, and displaying the information in an AR environment.

Example 8: The method of any of examples 1-7, wherein receiving the instrument data comprises receiving measurement data automatically measured by one or more types of sensors.

Example 9: The method of any of examples 1-8, wherein receiving the user input data comprises receiving one or more of a user-entered ticket, a user-entered property, or a user-entered note.

Example 10: The method of any of examples 1-9, wherein analyzing the relationship between the entity and the other entities having relationship connections with the entity comprises analyzing one or more events associated with the other entities having relationship connections with the entity and one or more management actions in response to the one or more events.

Example 11: The method of any of examples 1-10, wherein generating the insight comprises at least one of the following:
generating a time series of insights based on a long-term database or a series of snapshots;
identifying required input information based on the relationship or the one or more tags; or
integrating a static building information model and live operation data using an entity-based architecture.

Example 12: The method of any of examples 1-11, wherein sending the alert or the management action comprises sending the alert or the management action to an equipment, a system, or a building unit represented by the entity.

Example 13: The method of any of examples 1-12, further comprising:
pairing, by the computing device, one or more types of sensors with each entity of the one or more entities;
receiving, by the computing device, sensor data comprising one or more types of information automatically obtained from the one or more types of sensors and corresponding to the each entity of the one or more entities; and
determining, by the computing device and based on the one or more types of information, a status of the each entity of the one or more entities as to one or more physical attributes measured by the one or more types of sensors.

Example 14: The method of example 8 or 13, wherein the one or more types of sensors comprise at least one of the following: a temperature sensor, a humidity sensor, a carbon monoxide sensor, a pressure sensor, a proximity sensor, a motion detector, a smoke detector, an air quality sensor, a gas detector, a current sensor, or an occupancy sensor.

Example 15: The method of any of examples 1-14, further comprising determining, by the computing device and based on a management decision associated with each entity of the one or more entities, the management action for the building.

Example 16: The method of any of examples 1-15, further comprising:
receiving, by the computing device, one or more tags associated with a first entity of the one or more entities and one or more management decisions associated with the first entity of the one or more entities;
analyzing, by the computing device, a relationship between the one or more tags associated with the first entity of the one or more entities and each management decision of the one or more management decisions associated with the first entity of the one or more entities;
receiving, by the computing device, one or more tags associated with a second entity of the one or more entities;
analyzing, by the computing device, similarities and differences between the one or more tags associated with the first entity of the one or more entities and the one or more tags associated with the second entity of the one or more entities; and
determining, by the computing device and based on the similarities, the differences, and the relationship between the one or more tags associated with the first entity and the each management decision associated with the first entity, a management decision associated with the second entity of the one or more entities.

Example 17: The method of example 16, further comprising determining, by the computing device, a relationship between the one or more tags associated with the second entity of the one or more entities and the management decision associated with the second entity of the one or more entities.

Example 18: The method of example 17, further comprising generating, by the computing device and based on the relationship between the one or more tags associated with the second entity and the management decision associated with the second entity, an insight of the second entity by determining one or more parameters associated with the second entity.

Example 19: The method of any of examples 1-18, further comprising:
receiving, by the computing device, a dynamic data structure for each entity of the one or more entities, wherein the dynamic data structure comprises one or more dynamic data types collected at one or more snapshot frequencies, and wherein the dynamic data structure is stored in a dynamic data table named using each entity's globally unique identifier (GUID);
receiving, by the computing device, a static data structure for each entity of the one or more entities, wherein the static data structure is updated before an integration of the static data structure into a machine learning process, and wherein the static data structure is stored in a static data table;
integrating, by the computing device, the dynamic data structure and the static data structure into a combined data structure;
appending, by the computing device, one or more other data structures to the combined data structure to form an enriched data structure; and
providing, by the computing device, the enriched data structure as an input to a predictive artificial intelligence (AI) model, wherein the predictive AI model is a multi-input multi-output system, wherein the predictive AI model uses the enriched data structure to generate a value of one or more physical attributes for each entity of the one or more entities for a future timestamp, and wherein the value of the one or more physical attributes is used to generate an insight or a management decision associated with each entity of the one or more entities.

Example 20: The method of example 19, wherein the dynamic data structure comprises at least one of the following: a timestamp; a semantic name; a semantic unit; a semantic value; a semantic rule; or a time and date representation.

Example 21: The method of example 19 or 20, wherein the static data structure comprises at least one of the following: an entity GUID; a facility number; a geolocation; a spatial coordinate; an entity identifier (ID); a property semantic; a facility tag; or a related entity.

It will be appreciated by one of skill in the art that the present patent document discloses methods that, among other benefits, improve the decision-making effectiveness and efficiency of entity-based building management. Physical portions of a building are represented by entities in a digital twin model. Modeling results of each entity collectively yield a management decision for one or more portions of the building or the entire building.

Implementations of the subject matter and the functional operations described in this patent document can be implemented in various systems, digital electronic circuitry, or in computer software, firmware, or hardware, including the structures disclosed in this specification and their structural equivalents, or in combinations of one or more of them. Implementations of the subject matter described in this specification can be implemented as one or more computer program products, e.g., one or more modules of computer program instructions encoded on a tangible and non-transitory computer readable medium for execution by, or to control the operation of, data processing apparatus. The computer readable medium can be a machine-readable storage device, a machine-readable storage substrate, a memory device, a composition of matter effecting a machine-readable propagated signal, or a combination of one or more of them. The term "data processing unit" or "data processing apparatus" encompasses various apparatus, devices, and machines for processing data, including by way of example a programmable processor, a computer, or multiple processors or computers. The apparatus can include, in addition to hardware, code that creates an execution environment for the computer program in question, e.g., code that constitutes processor firmware, a protocol stack, a database management system, an operating system, or a combination of one or more of them.

A computer program (also known as a program, software, software application, machine-readable script, or code) can be written in any form of programming language, including compiled or interpreted languages, and it can be deployed in any form, including as a stand-alone program or as a module, component, subroutine, or other unit suitable for use in a computing environment. A computer program does not necessarily correspond to a file in a file system. A program can be stored in a portion of a file that holds other programs or data (e.g., one or more scripts stored in a markup language document), in a single file dedicated to the program in question, or in multiple coordinated files (e.g., files that store one or more modules, sub programs, or portions of code). A computer program can be deployed to be executed on one computer or on multiple computers that are located at one site or distributed across multiple sites and interconnected by a communication network.

The processes and logic flows described in this specification can be performed by one or more programmable processors executing one or more computer programs to perform functions by operating on input data and generating output. The processes and logic flows can also be performed by, and apparatus can also be implemented as, special purpose logic circuitry, e.g., an FPGA (field programmable gate array) or an ASIC (application specific integrated circuit).

Processors suitable for the execution of a computer program include, by way of example, both general and special purpose microprocessors, and any one or more processors of any kind of digital computer. Generally, a processor will receive instructions and data from a read only memory or a random access memory or both. The essential elements of a computer are a processor for performing instructions and one or more memory devices for storing instructions and data. Generally, a computer will also include, or be operatively coupled to receive data from or transfer data to, or both, one or more mass storage devices for storing data, e.g., magnetic, magneto optical disks, or optical disks. However, a computer need not have such devices. Computer readable media suitable for storing computer program instructions and data include various forms of nonvolatile memory, media and memory devices, including by way of example semiconductor memory devices, e.g., EPROM, EEPROM, and flash memory devices. The processor and the memory can be supplemented by, or incorporated in, special purpose logic circuitry.

While this patent document contains many specifics, these should not be construed as limitations on the scope of any invention or of what may be claimed, but rather as descriptions of features that may be specific to particular embodiments of particular inventions. Certain features that are described in this patent document in the context of separate embodiments can also be implemented in combination in a single embodiment. Conversely, various features that are described in the context of a single embodiment can also be implemented in multiple embodiments separately or in any suitable subcombination. Moreover, although features may be described above as acting in certain combinations and even initially claimed as such, one or more features from a claimed combination can in some cases be excised from the combination, and the claimed combination may be directed to a subcombination or variation of a subcombination.

Similarly, while operations are depicted in the drawings in a particular order, this should not be understood as requiring that such operations be performed in the particular order shown or in sequential order, or that various illustrated operations be performed, to achieve desirable results. Moreover, the separation of various system components in the embodiments described in this patent document should not be understood as requiring such separation in all embodiments.

Only a few implementations and examples are described and other implementations, enhancements and variations can be made based on what is described and illustrated in this patent document.

## Claims

1. A method of modeling and managing a building on an entity level by dividing the building and its related information into one or more entities, wherein a management result is presented in a two-dimensional (2D) representation, a three-dimensional (3D) representation, or an augmented reality (AR) representation, the method comprising:
extracting, by a computing device and from a building information model, building information associated with an entity of the one or more entities of the building and comprising one or more physical attributes of the entity;
receiving, by the computing device, instrument data comprising one or more types of information associated with the entity and automatically obtained from one or more types of instruments corresponding to the one or more types of information;
receiving, by the computing device, user input data comprising one or more data entries reporting one or more conditions of the entity or providing one or more tags indicating one or more characteristics of the entity;
analyzing, by the computing device, a relationship between the entity and other entities having relationship connections with the entity or a similar characteristic between the entity and other entities sharing a same tag of the one or more tags as the entity;
generating, by the computing device and based on at least one of the building information, the instrument data, the user input data, the relationship, or the similar characteristic, an insight of the entity by determining one or more parameters associated with the entity;
sending, by the computing device and based on the insight, the management result associated with the entity and to be presented in the 2D representation, the 3D representation, or the AR representation; and
sending, by the computing device and based on the insight or a change in a value of an attribute, an alert or a management action triggered by the alert.

2. The method of claim 1, wherein dividing the building into the one or more entities comprises:
extracting, by the computing device and from the building information model, a plurality of data points representing a digital structure of the building; and
organizing, by the computing device, the plurality of data points into one or more data packages, wherein each data package of the one or more data packages represents an entity of the one or more entities.

3. The method of claim 1, wherein dividing the building into the one or more entities comprises receiving manually designated data points representing a digital structure of the building as the one or more entities.

4. The method of any of claims 1-3, further comprising storing periodically, by the computing device, one or more of the building information, the instrument data, the user input data, the relationship, the similar characteristic, the insight, the management result, the alert, or the management action into a long-term data structure, wherein the long-term data structure is used to improve a capability of the computing device to generate insights.

5. The method of any of claims 1-4, further comprising grouping and filtering, by the computing device and based on relevance, one or more of the building information, the instrument data, the user input data, the relationship, or the similar characteristic to generate filtered data, wherein generating the insight of the entity is further based on the filtered data.

6. The method of any of claims 1-5, further comprising:
dividing, by the computing device, the entity into one or more sub-entities, wherein each sub-entity of the one or more sub-entities comprises a portion of data points possessed by the entity; and
generating, by the computing device, one or more insights, attributes, or properties of the one or more sub-entities, wherein generating the insight of the entity further comprises combining the one or more insights, attributes, or properties of the one or more sub-entities.

7. The method of any of claims 1-6, wherein sending the management result to be presented in the 2D representation, the 3D representation, or the AR representation comprises one or more of the following:
adding a layer on top of a 2D drawing, inserting a customizable icon for the entity on the layer, and allowing access to information associated with the entity in a 2D viewer;
assigning one or more objects of a 3D model to the entity and allowing the entity and information associated with the entity to be illustrated in a 3D environment; or
providing the entity with a globally unique identifier (GUID) and a corresponding quick response code (QRC), enabling access to information associated with the entity through scanning the QRC, and displaying the information in an AR environment.

8. The method of any of claims 1-7, wherein receiving the instrument data comprises receiving measurement data automatically measured by one or more types of sensors.

9. The method of any of claims 1-8, wherein receiving the user input data comprises receiving one or more of a user-entered ticket, a user-entered property, or a user-entered note.

10. The method of any of claims 1-9, wherein analyzing the relationship between the entity and the other entities having relationship connections with the entity comprises analyzing one or more events associated with the other entities having relationship connections with the entity and one or more management actions in response to the one or more events.

11. The method of any of claims 1-10, wherein generating the insight comprises at least one of the following:
generating a time series of insights based on a long-term database or a series of snapshots;
identifying required input information based on the relationship or the one or more tags; or
integrating a static building information model and live operation data using an entity-based architecture.

12. The method of any of claims 1-11, wherein sending the alert or the management action comprises sending the alert or the management action to an equipment, a system, or a building unit represented by the entity.

13. The method of any of claims 1-12, further comprising:
pairing, by the computing device, one or more types of sensors with each entity of the one or more entities;
receiving, by the computing device, sensor data comprising one or more types of information automatically obtained from the one or more types of sensors and corresponding to the each entity of the one or more entities; and
determining, by the computing device and based on the one or more types of information, a status of the each entity of the one or more entities as to one or more physical attributes measured by the one or more types of sensors.

14. The method of any of claims 1-13, further comprising:
receiving, by the computing device, one or more tags associated with a first entity of the one or more entities and one or more management decisions associated with the first entity of the one or more entities;
analyzing, by the computing device, a relationship between the one or more tags associated with the first entity of the one or more entities and each management decision of the one or more management decisions associated with the first entity of the one or more entities;
receiving, by the computing device, one or more tags associated with a second entity of the one or more entities;
analyzing, by the computing device, similarities and differences between the one or more tags associated with the first entity of the one or more entities and the one or more tags associated with the second entity of the one or more entities; and
determining, by the computing device and based on the similarities, the differences, and the relationship between the one or more tags associated with the first entity and the each management decision associated with the first entity, a management decision associated with the second entity of the one or more entities.

15. The method of any of claims 1-14, further comprising:
receiving, by the computing device, a dynamic data structure for each entity of the one or more entities, wherein the dynamic data structure comprises one or more dynamic data types collected at one or more snapshot frequencies, and wherein the dynamic data structure is stored in a dynamic data table named using each entity's globally unique identifier (GUID);
receiving, by the computing device, a static data structure for each entity of the one or more entities, wherein the static data structure is updated before an integration of the static data structure into a machine learning process, and wherein the static data structure is stored in a static data table;
integrating, by the computing device, the dynamic data structure and the static data structure into a combined data structure;
appending, by the computing device, one or more other data structures to the combined data structure to form an enriched data structure; and
providing, by the computing device, the enriched data structure as an input to a predictive artificial intelligence (AI) model, wherein the predictive AI model is a multi-input multi-output system, wherein the predictive AI model uses the enriched data structure to generate a value of one or more physical attributes for each entity of the one or more entities for a future timestamp, and wherein the value of the one or more physical attributes is used to generate an insight or a management decision associated with each entity of the one or more entities.
